# EUROPÄISCHE PATENTANMELDUNG

(11) **EP 3 431 419 A1**
(43) Veröffentlichungstag der Anmeldung: **23.01.2019**
(21) Anmeldenummer: 17181797.6
(22) Anmeldetag: 18.07.2017
(51) Int. Cl.: B65G 39/10

(54) **SCHWERKRAFTROLLENSYSTEM FÜR DEN ÜBERGANG VOM SORTER ZUR ENDSTELLE FÜR POLYBAGS**

(71) Anmelder: Siemens Aktiengesellschaft, 80333 München (DE)
(72) Erfinder: Schitthelm, Dr. rer.-nat. Oliver, 90425 Nürnberg (DE); Röltgen, Maximilian, 79379 Müllheim (DE); Barth, Thomas, 78244 Gottmadingen (DE); Hettich, Sören, DE-78462 Konstanz (DE)
(74) Vertreter: Maier, Daniel Oliver

(57) **Zusammenfassung**

Schwerkraftrollensystem (1) für den Transport von heterogenen Stückgütern, insbesondere von Polybags (2), entlang einer Förderrichtung (F), gekennzeichnet durch eine Schwerkraftrollenreihe (4), die aufgeteilt ist in mehrere unabhängig voneinander um eine Achse (4a) der Schwerkraftrollenreihe (4) rotierbare Schwerkraftrollen (4b, 4c, 4d).

## Beschreibung

Die Erfindung bezieht sich auf das technische Gebiet des Beförderns von Stückgut von einem Sorter zu einer Endstelle.

Die Anforderungen an zu sortierende Güter in Paketlogistikzentren unterliegen aufgrund des wachsenden E-Commerce einer Transformation. Der Anteil an Versandtüten, sogenannten Polybags, nimmt stetig zu und erreicht in manchen Paketzentren 40% und mehr. Bei dem bleiben Übergang vom Sorter zur Endstelle insbesondere leichte, weiche Polybags, beispielsweise mit Kleidung, vermehrt liegen und stören damit den Sortierprozess erheblich.

Eine Lösung für die Problematik ist es die Polybags in so genannten Mausefallen zu transportieren. Dabei werden sie zu Beginn des Sortierprozesses manuell in eine Transportschale gepackt die den Übergang vom Sorter zur Endstelle sicher schafft. Alternativ kann die Übergangszone mit größerer Neigung ausgestaltet werden. Diese hat aber zur Konsequenz, dass reguläre Sendungen weniger stark gebremst werden und damit die Schadensrate zunimmt.

Bislang werden beim Übergang vom Sorter zur Endstelle meist Bleche oder lange Schwerkraftrollen eingesetzt. Damit eine Schwerkraftrolle von einem Gut gedreht wird muss eine ausreichend große Kraft tangential an der Oberfläche wirken um die Massenträgheit der Rolle zu überwinden.

Der vorliegenden Erfindung liegt daher die Aufgabe zugrunde, den Fördervorgang von heterogenem Stückgut, beispielsweise von Polybags, entlang einer Förderstrecke von einem Sorter zu einer Endstelle zu verbessern.

Diese Aufgabe wird durch die in den unabhängigen Ansprüchen vorgeschlagenen Verfahren und Vorrichtungen gelöst.

Vorteilhafte Ausgestaltungen der Erfindung sind in weiteren Ansprüchen angegeben.

Gemäss einem Aspekt der Erfindung wird ein Verfahren zum Befördern eines Polybags innerhalb eines Stückgutsortiersystems entlang einer Förderrichtung von einem Sorter zu einer Endstelle vorgestellt. Dabei wird zunächst der Polybag aus dem Sorter ausgegeben und danach mit Hilfe eines Schwerkraftrollensystems von dem Sorter zu der Endstelle befördert. Das Schwerkraftrollensystem umfasst mindestens zwei Schwerkraftrollen, welche unabhängig voneinander um dieselbe Achse rotierbar sind. Dies hat den Vorteil, dass der Polybag nur die Trägheitsmomente derjenigen Schwerkraftrollen durch sein Eigengewicht überwinden muss, auf denen er aufliegt. Im Extremfall liegt ein Polybag auf nur einer Schwerkraftrolle der mindestens zwei Schwerkraftrollen auf.

Gemäss einem weiteren Aspekt der Erfindung wird ein Schwerkraftrollensystem für den Transport von heterogenen Stückgütern, insbesondere Polybags, entlang einer Förderrichtung vorgeschlagen. Das Schwerkraftrollensystem umfasst eine Schwerkraftrollenreihe, die aufgeteilt ist in mehrere unabhängig voneinander um eine Achse der Schwerkraftrollenreihe rotierbare Schwerkraftrollen.

Gemäss einem weiteren Aspekt wird ein Schwerkraftrollensystem für den Transport von heterogenen Stückgütern von einem Sorter zu einer Sorter-Endstelle entlang einer Förderrichtung, vorgestellt. Das Schwerkraftrollensystem umfasst mehrere Schwerkraftrollenreihen, die jeweils aufgeteilt sind in mehrere unabhängig voneinander um eine Achse der jeweiligen Schwerkraftrollenreihe rotierbare Schwerkraftrollen. Die Schwerkraftrollen von benachbarten Schwerkraftrollenreihen sind quer zu der Förderrichtung versetzt zueinander angeordnet und ineinander verschachtelt. Dies ermöglicht für Polybags eine besonders effiziente Beförderung durch deren eigene Schwerkraft. Als synergistischer Effekt bleiben weniger Polybags auf der Förderstrecke liegen. Als weiterer synergistischer Effekt kann dadurch die Variation der Fördergeschwindigkeiten von unterschiedlichen heterogenen Stückgütern entlang des Schwerkraftrollensystems gering gehalten werden. Auf diese weisen kann beispielsweise für einen Stückgutstrom der aus Pakten und Polybags besteht verhindert werden, dass Polybags auf dem Schwerkraftrollensystem liegen bleiben. Zudem kann die Variation der Geschwindigkeit von Polybags und Paketen geringer gehalten werden.

Gemäss einem weiteren Aspekt wird ein Sortiersystem vorgestellt. Das Sortiersystem umfasst einen Sorter, eine Endstelle, sowie ein oben beschriebenes Schwerkraftrollensystem.

Gemäss einer Ausführungsform umfasst das Schwerkraftrollensystem mindestens zwei weitere Schwerkraftrollen, welche unabhängig voneinander um eine weitere Achse rotierbar sind. Die weitere Achse ist also verschieden von der Achse. Dadurch kann der Polybag über längere Strecken befördert werden.

Gemäss einer Ausführungsform sind die mindestens zwei weiteren Schwerkraftrollen quer zur Förderrichtung versetzt zu den mindestens zwei Schwerkraftrollen angeordnet.

Gemäss einer Ausführungsform sind die mindestens zwei weiteren Schwerkraftrollen in die Schwerkraftrollen verschachtelt. Mit andern Worten, die weiteren Schwerkraftrollen greifen in die Schwerkraftrollen ein. Dies ermöglicht es den Abstand von benachbarten Achsen kleiner als der Radius der ersten plus der zweiten Schwerkraftrollenreihe zu halten. Der Polybag kann dadurch seine eigene Schwerkraft besser ausnutzen, um die Trägheit derjenigen Schwerkraftrollen auf denen er aufliegt so zu überwinden, dass er sich in Förderrichtung bewegt.

Gemäss einer Ausführungsform sind die Achse und die weitere Achse unter Berücksichtigung eines gegebenen physischen Achsenradius und eines gegebenen Schwerkraftrollenradius minimal zu einander beabstandet. Auch dadurch kann der Polybag seine eigene Schwerkraft besser ausnutzen, um die Trägheit derjenigen Schwerkraftrollen auf denen er aufliegt so zu überwinden, dass er sich in Förderrichtung bewegt.

Gemäss einer Ausführungsform sind die Radien der mindestens zwei Schwerkraftrollen sowie der mindestens zwei weiteren Schwerkraftrollen gleich.

Gemäss einer weiteren Ausführungsform sind die Schwerkraftrollen von übernächst benachbarten Schwerkraftrollenreihen quer zur Förderrichtung gleich zueinander angeordnet. Dadurch können die Schwerkraftrollen besonders dicht ineinander verschachtelt werden.

Gemäss einem weiteren Ausführungsform sind die Achsen von benachbarten Schwerkraftrollenreihen unter Berücksichtigung eines gegebenen physischen Achsenradius und eines gegebenen Schwerkraftrollenradius minimal zueinander beabstandet. Dadurch können die Schwerkraftrollen zusätzlich besonders dicht ineinander verschachtelt werden.

Gemäss einer weiteren Ausführungsform sind die Radien der Schwerkraftrollen und/oder die Radien der weiteren Schwerkraftrollen gleich.

Die Erfindung wird nachfolgend anhand der Zeichnung beispielsweise näher erläutert. Dabei zeigen:
Figur 1 ein Schwerkraftrollensystem gemäss dem Stand der Technik;
Figur 2 eine perspektivische Ansicht eines Sortiersystems mit einem Schwerkraftrollensystem gemäss einer Ausführungsform der Erfindung;
Figur 3 eine Draufsicht auf einen Ausschnitt des Schwerkraftrollensystems von Figur 2.

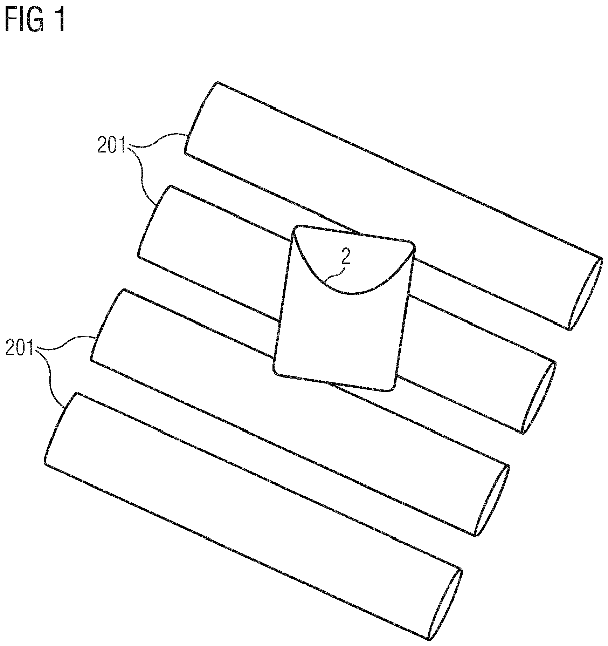

Figur 1 zeigt ein Schwerkraftrollensystem 200, das mehrere über die Breite des Schwerkraftrollensystems sich erstreckende Schwerkraftrollen 201 umfasst. Ein Polybag 2 muss um jede dieser Rollen 201 zu überwinden jeweils deren volles Trägheitsmoment überwinden.

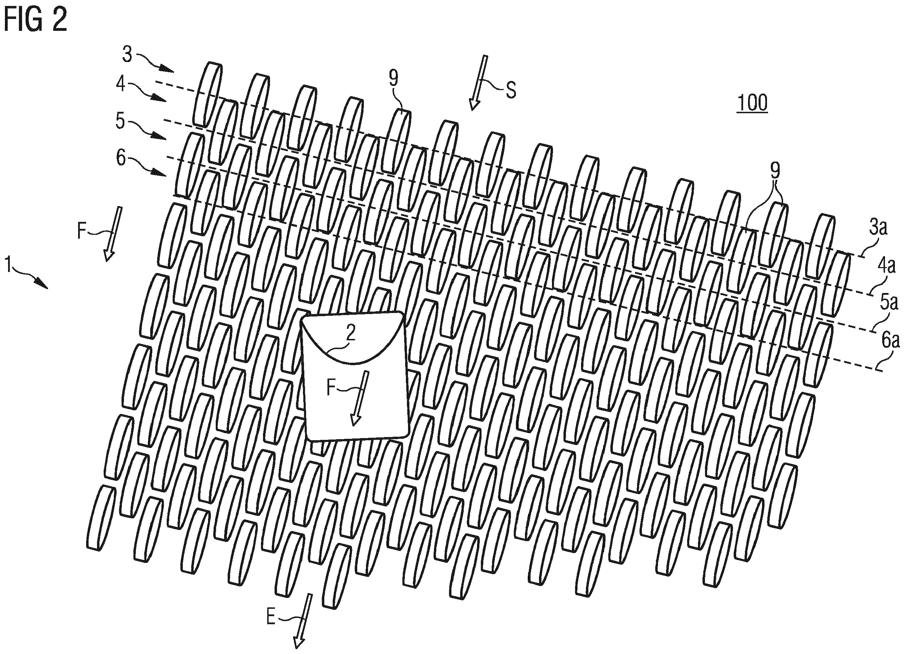

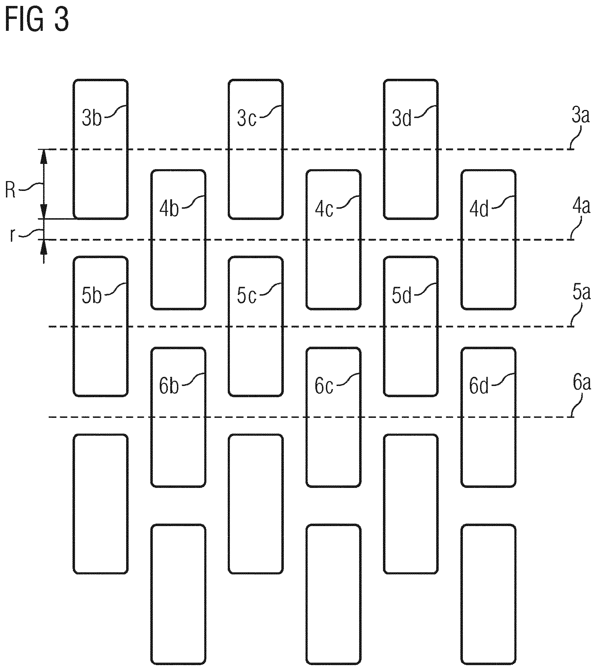

Figur 2 zeigt ein Sortiersystem 100 mit einem Sorter S, einer Sorter-Endstelle E und einem Schwerkraftrollensystem 1 gemäss einer Ausführungsform der Erfindung. Das Schwerkraftrollensystem 1, insbesondere die Anordnung von dessen Schwerkraftrollen, ist in Figur 3 in einer schematisierten Draufsicht dargestellt. Die Schwerkraftrollen 9 sind in Schwerkraftrollenreihen angeordnet, von denen der Übersichtlichkeit halber nur die Reihen 3, 4, 5, 6 mit Bezugszeichen identifiziert sind. Die Schwerkraftrollenreihen 3, 4, 5, 6 sind jeweils aufgeteilt sind in mehrere unabhängig voneinander um eine Achse 3a, 4a, 5a, 6a der jeweiligen Schwerkraftrollenreihe 3, 4, 5, 6 rotierbare Schwerkraftrollen 9. Wie in Figur 3 gezeigt, sind die Schwerkraftrollen 3b-d um die Achse 3a rotierbar, die Schwerkraftrollen 4b-d um die Achse 4a, die Schwerkraftrollen 5b-d um die Achse 5a, und die Schwerkraftrollen 6b-d um die Achse 6a.

Unter dem Begriff "Achse" ist hier nicht nur eine physische Achse zu verstehen, sondern auch eine geometrische Achse, welche auch als Rotationsachse bezeichnet wird. Also eine Gerade, um die sich ein oder mehrere Körper drehen. Mit andern Worten fällt auch beispielsweise eine Anordnung unter den Schutzbereich, in der eine geometrische Achse aufgeteilt ist in mehrere einzelne physische Achsen, die entlang der geometrischen Achse angeordnet sind, mit jeweils nur einer einzigen Schwerkraftrolle auf jeder physischen Achse, die die Schwerkraftrollen nach wie vor um dieselbe geometrische Achse rotierbar sind. Auch fallen Lösungen mit Schwerkraftrollen unter den Schutzbereich, bei denen die Schwerkraftrollen nicht um eine physische Achse drehen, sondern anderweitig so gelagert sind, dass sie wie in den unabhängigen Ansprüchen beschrieben frei um eine Achse rotierbar sind.

Das Schwerkraftrollensystem 1 unterstützt den Transport von heterogenen Stückgütern, beispielsweise von einem Stückgutstrom der Polybags 2 und Pakete umfasst, von dem Sorter S zu der Sorter-Endstelle E entlang einer Förderrichtung F.

Der Übersichtlichkeit der Figur 2 willen, sind nicht alle Schwerkraftrollen und Schwerkraftrollenreihen mit einem Bezugszeichen versehen. Die Schwerkraftrollen von benachbarten Schwerkraftrollenreihen 3, 4, 5, 6 sind quer zu der Förderrichtung F versetzt zueinander und ineinander verschachtelt angeordnet. Mit andern Worten: Die Schwerkraftrollen von benachbarten Schwerkraftrollenreihen greifen ineinander ein und der Abstand von benachbarten Achsen ist kleiner als die Summe der Radien der involvierten Schwerkraftrollenreihen. Diese Anordnung erlaubt einerseits, dass das jeweils zu fördernde Stückgut eine minimale Trägheit der Schwerkraftrollen überwinden muss. Zudem wird insbesondere für Polybags der jeweilige tangentiale Angriffspunkt auf den Schwerkraftrollen so optimiert, sodass die Wahrscheinlichkeit reduziert wird, dass ein Polybag so an einer Rolle angreift, dass auf diese durch die Schwerkraft des Polybags ein rückwärts gerichtetes Drehmoment wirken würde. Dieser Vorteil wird zusätzlich verstärkt, indem die Schwerkraftrollen möglichst dicht gepackt werden. Dies kann beispielsweise dadurch umgesetzt werden, dass die Schwerkraftrollen von übernächst benachbarten Schwerkraftrollenreihen quer zur Förderrichtung gleich zueinander angeordnet sind, also dass beispielsweise die Schwerkraftrollenreihen 3 und 5, sowie die Schwerkraftrollenreihen 4 und 6 in Fortbewegungsrichtung F gesehen gleich ausgerichtet und minimal voneinander beabstandet sind.

Wie in Figur 3 besonders gut ersichtlich ist, ist beispielsweise Schwerkraftrollenreihe 4 aufgeteilt in mehrere unabhängig voneinander um eine Achse 4a der Schwerkraftrollenreihe 4 rotierbare Schwerkraftrollen 4b, 4c, 4d. Die weitere Schwerkraftrollenreihe 5 ist ebenfalls aufgeteilt in mehrere unabhängig voneinander um eine weitere Achse 5a der weiteren Schwerkraftrollenreihe 5 rotierbare weitere Schwerkraftrollen 5b, 5c, 5d. Die weiteren Schwerkraftrollen 5b, 5c, 5d sind quer zu der Förderrichtung F versetzt zu den Schwerkraftrollen 4b, 4c, 4d angeordnet. Zudem sind die weiteren Schwerkraftrollen 5b, 5c, 5d in die Schwerkraftrollen 4b, 4c, 4d verschachtelt. Diese geometrischen Anordnungskonzepte wiederholen sich in weiteren Schwerkraftrollenreihen.

Dies ermöglicht eine besonders zuverlässige Beförderung eines heterogenen Stückgutstroms, welcher Polybags und Pakete umfasst. Dazu wird ein Polybag 2 aus dem Sorter S ausgegeben. Mit Hilfe des Schwerkraftrollensystems 1 wird der Polybag 2 von dem Sorter S zu der Endstelle E befördert.

Eine Ausführungsform der Erfindung basiert darauf, eine Schwerkraftrolle zu teilen und gegen mehrere kurze, unabhängig von einander rotierende Rollen zu ersetzen. Das Trägheitsmoment jeder dieser Rollen wird dadurch reduziert und damit die Wahrscheinlichkeit, dass eine als Stückgut ausgestaltete Sendung liegen bleibt. Im Vergleich zu den in Figur 1 gezeigten Schwerkraftrollen muss ein Polybag des in Figur 2 gezeigten Schwerkraftrollensystems nur einen Bruchteil des Trägheitsmoments pro Schwerkraftrollenreihe überwinden.

Werden die benachbarten Rollen dann versetzt angeordnet, reduzieren sich außerdem die Einzugmöglichkeiten an denen die Polybags hängen bleiben können, wie in den Figuren 2 und 3 dargestellt.

Die Problematik von liegen bleibenden Polybags lässt sich zumindest teilweise auf die zu großen Trägheitsmomente der Schwerkraftrollen zurück zu führen. Diese Problematik und die Notwendigkeit des Einsatzes von Mausefallen für die Sortierung von leichten, weichen Polybags lässt sich durch Ausführungsformen der Erfindung reduzieren. Dies reduziert insbesondere den manuellen Aufwand bei der Sortierung, da das Beladen der Mausefallen seitens der Operatoren entfällt und erzeugt damit einen Kostenvorteil.

## Patentansprüche

1. Verfahren zum Befördern eines Polybags (2) innerhalb eines Stückgutsortiersystems (100) entlang einer Förderrichtung (F) von einem Sorter (S) zu einer Endstelle (E), umfassend die Verfahrensschritte:
Ausgeben des Polybags (2) aus dem Sorter (S);
Befördern des Polybags (2) mit Hilfe eines Schwerkraftrollensystems (1) von dem Sorter (S) zu der Endstelle (E), wobei das Schwerkraftrollensystem (1) mindestens zwei Schwerkraftrollen (4b, 4c, 4d) umfasst, welche unabhängig voneinander um dieselbe Achse (4a) rotierbar sind.

2. Verfahren nach Anspruch 1, wobei das Schwerkraftrollensystem mindestens zwei weitere Schwerkraftrollen (5b, 5c, 5d) umfasst, welche unabhängig voneinander um eine weitere Achse (5a) rotierbar sind.

3. Verfahren nach Anspruch 1 oder 2, wobei die mindestens zwei weiteren Schwerkraftrollen (5b, 5c, 5d) quer zur Förderrichtung (F) versetzt zu den mindestens zwei Schwerkraftrollen (4b, 4c, 4d) angeordnet sind.

4. Verfahren nach einem der vorhergehenden Ansprüche, wobei die mindestens zwei weiteren Schwerkraftrollen (5b, 5c, 5d) in die Schwerkraftrollen (4b, 4c, 4d) verschachtelt sind.

5. Verfahren nach einem der vorhergehenden Ansprüche, wobei die Achse (4a) und die weitere Achse (5a) unter Berücksichtigung eines gegebenen physischen Achsenradius (r) und eines gegebenen Schwerkraftrollenradius (R) minimal zu einander beabstandet sind.

6. Verfahren nach einem der vorhergehenden Ansprüche, wobei die Radien (R) der mindestens zwei Schwerkraftrollen (4b, 4c, 4d) sowie der mindestens zwei weiteren Schwerkraftrollen (5b, 5c, 5d) gleich sind.

7. Schwerkraftrollensystem (1) für den Transport von heterogenen Stückgütern, insbesondere von Polybags (2), entlang einer Förderrichtung (F), **gekennzeichnet durch** eine Schwerkraftrollenreihe (4), die aufgeteilt ist in mehrere unabhängig voneinander um eine Achse (4a) der Schwerkraftrollenreihe (4) rotierende Schwerkraftrollen (4b, 4c, 4d).

8. Schwerkraftrollensystem (1) nach Anspruch 7, umfassend eine weitere Schwerkraftrollenreihe (5), die aufgeteilt ist in mehrere unabhängig voneinander um eine weitere Achse (5a) der weiteren Schwerkraftrollenreihe (5) rotierbare weitere Schwerkraftrollen (5b, 5c, 5d).

9. Schwerkraftrollensystem (1) nach Anspruch 7 oder 8, wobei die Schwerkraftrollenreihe (4) und die weitere Schwerkraftrollenreihe (5) so ausgestaltet und angeordnet sind, dass die weiteren Schwerkraftrollen (5b, 5c, 5d) quer zu der Förderrichtung (F) versetzt zu den Schwerkraftrollen (4b, 4c, 4d) angeordnet sind.

10. Schwerkraftrollensystem (1) nach einem der Ansprüche 7 bis 9, wobei die Schwerkraftrollenreihe (3) und die weitere Schwerkraftrollenreihe (4) so ausgestaltet und angeordnet sind, dass die weiteren Schwerkraftrollen (5b, 5c, 5d) in die Schwerkraftrollen (4b, 4c, 4d) verschachtelt sind.

11. Schwerkraftrollensystem (1) zur Verbesserung eines Fördervorgangs von heterogenen Stückgütern, beispielsweise von einem Stückgutstrom der Polybags (2) und Pakete umfasst, von einem Sorter (S) zu einer Sorter-Endstelle (E) entlang einer Förderrichtung (F), umfassend mehrere Schwerkraftrollenreihen (3, 4, 5, 6), die jeweils aufgeteilt sind in mehrere unabhängig voneinander um eine Achse (3a, 4a, 5a, 6a) der jeweiligen Schwerkraftrollenreihe (3, 4, 5, 6) rotierbare Schwerkraftrollen, wobei die Schwerkraftrollen von benachbarten Schwerkraftrollenreihen (3, 4, 5, 6) quer zu der Förderrichtung (F) versetzt zueinander und ineinander verschachtelt angeordnet sind.

12. Schwerkraftrollensystem (1) nach Anspruch 11, wobei die Schwerkraftrollen von übernächst benachbarten Schwerkraftrollenreihen (3, 5) quer zur Förderrichtung gleich zueinander angeordnet sind.

13. Schwerkraftrollensystem (1) nach einem der Ansprüche 7 bis 12, wobei die Achsen (3a, 4a) von benachbarten Schwerkraftrollenreihen unter Berücksichtigung eines gegebenen physischen Achsenradius (r) und eines gegebenen Schwerkraftrollenradius (R) minimal zu einander beabstandet sind.

14. Schwerkraftrollensystem (1) nach einem der Ansprüche 7 bis 13, wobei die Radien der Schwerkraftrollen und/oder die Radien der weiteren Schwerkraftrollen gleich sind.

15. Sortiersystem (1), umfassend einen Sorter (S), eine Endstelle (E), sowie ein Schwerkraftrollensystem (1) nach einem der Ansprüche 7 bis 14.
